# EUROPEAN PATENT SPECIFICATION

(11) **EP 2 277 831 B1**
(45) Date of publication and mention of the grant of the patent: **23.05.2012**
(21) Application number: 10007122.4
(22) Date of filing: 09.07.2010
(51) Int. Cl.: C01G 43/01, C01G 43/025, C01G 43/06

(54) **Two step dry UO2 production process utilizing a positive sealing valve means between steps**
Zweistufiges Verfahren zur Herstellung von trockenem UO2 mittels positivem Dichtungsventil zwischen den Schritten
Processus de production UO2 sec à deux étapes utilisant un support de clapet obturateur entre les étapes

(30) Priority: 20.07.2009 US 465729
(43) Date of publication of application: 26.01.2011
(73) Proprietor: Westinghouse Electric Company LLC, Cranberry Township, Pennsylvania 16066 (US)
(72) Inventor: Lahoda, Edward J., Pittsburgh Pennsyslvania 15218-1352 (US)
(74) Representative: Gallo, Wolfgang

(56) References cited:
- EP-A1- 1 985 587
- US-A- 3 298 452
- US-A- 3 765 844
- US-A- 4 053 559
- US-A- 4 830 841
- US-A1- 2003 064 519

## Description

### BACKGROUND OF THE INVENTION

### Field of the Invention

The present invention relates to methods of manufacturing uranium oxide powder for use as nuclear fuel and, more particularly, to a two-step dry process for producing uranium oxide powder that eliminates the need for wet processing, and results in easy to handle *UO*₂ powder and stable pellets.

### Description of the Prior Art

The preparation of commercial nuclear fuels mainly has been by processes which use enriched and depleted uranium (*i.e*., enriched or depleted in the uranium-235 isotope compared to the uranium-235 content of naturally occurring uranium ore) feed as *UF*₆. The enriched *UF*₆ is converted to *UO*₂ by processes selected to give the ceramic sinterability needed for the preparation of nuclear fuel pellets.

While procedures for converting *UF*₆ to uranium oxides are known, currently available procedures are not particularly efficient or economical for converting *UF*₆ to *UO*₂. More specifically, the *UF*₆ conversions for nuclear fuels have been developed to prepare *UO*₂ with well controlled ceramic properties. Furthermore, because of the need to control their ceramic properties and because of thermodynamic limitations, the known commercial conversion processes are either complex aqueous-based processes with multiple process stages or a one-stage dry process. While the wet processes are easier to control, they produce large amounts of liquid wastes. The single step dry process produces a minimal waste stream but is difficult to operate.

Early patents issued to Reese et al., U.S. Patent No. 3,168,369, filed in 1961, and to Blundell et al., U.S. Patent No. 3,235,327, filed in 1962, described all the basic reactions and general technology required to make uranium dioxide nuclear fuel for nuclear reactors from uranium hexafluoride:

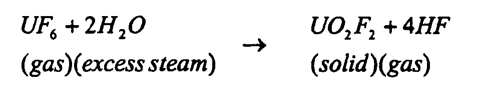

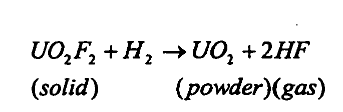

at 1000°F - 1800°F or 537°C- 982°C in dry processes. Here an inert gas could be used to promote a gas phase reaction between *UF*₆ and *H*₂*O*, as steam, to provide a very high surface area, uranyl fluoride (*UO*₂*F*₂) fluffy powder, having a tap density in the range 0.5 to 1.5 gm./cc. and a surface area in the range of 2 to 4 meters²/gm. (Tap density is obtained by putting the *UO*₂ powder in a graduated cylinder and vibrating for a given time. This sets the volume and the graduated cylinder is weighed to obtain the weight of the powder.)

Numerous U.S. patents have been subsequently issued directed towards processes for the conversion of *UF*₆ to uranium oxides. See, for example, U.S. Patent No. 4,830,841 and the U.S. patents listed therein, which describe procedures for converting *UF*₆ to uranium dioxide in furnaces, rotary kilns, fluidized beds and the like. For example, U.S. Patent No. 4,830,841 is directed to a process for preparing *UO*₂ from *UF*₆ by reacting *UF*₆ with steam to produce submicron uranyl fluoride powder, fluidizing a bed of uranium oxide material with a mixture of steam, hydrogen and inert gas at about 580°C to about 700°C, and introducing the submicron uranyl fluoride powder into the fluidized bed of uranium oxide material so that the uranyl fluoride powder is agglomerated, densified, fluidized, defluorinated and reduced to a fluoride-containing uranium oxide material which is removed from the fluidized bed and then contacted with hydrogen and steam at elevated temperature to obtain *UO*₂ essentially free of fluoride. The *UO*₂ product produced from this process tends to be very inactive and requires an intense milling step to produce moderately active powder. In addition, there often is incomplete conversion of *UO*₂ *F*₂ to *UO*₃ /*U*₃*O*₈, which leads to unacceptable contamination in the final *UO*₂ powder. This likely is due to inadequate residence time and the growth of large particles in the initial phase which cannot complete the fluoride removal reaction. The differences between plural fluid bed reactors and flame reaction via flame plumes as used in this invention are dramatically, fundamentally different and nonequivalent, as discussed later.

Other U.S. patents disclose single-step processes for producing nuclear reactor fuel, such as U.S. Patent No. 4,397,824 and U.S. Patent No. 5,875,385. An exemplary single-step process for producing solid uranium oxide powder is disclosed in U.S. Patent No. 5,752,158, which describes a single-step MDR (Modified Direct Route-this is really a trade name and not a very illustrative name) process for producing solid uranium oxide powder and gaseous *HF* from *UF*₆ by bringing together two gaseous reactant streams, one of the streams comprising *UF*₆ optionally admixed with oxygen as *O*₂, and the second reactant stream comprising a mixture of hydrogen as *H*₂ or as a hydrogen-containing compound and oxygen as an oxygen-containing compound. The gaseous reactant streams are brought together at a temperature and composition such that the *UF₆* is converted rapidly by flame reaction into readily separable solid uranium oxide and a gaseous *HF* product. Another single-step process is disclosed in U.S. Patent No. 4,112,005, which describes reacting *UF₆* with steam within a first region of a vessel in which *UO*₂*F*₂ is obtained, which then is subjected to reduction within a second region of the vessel to obtain *UO*₂. The *UO*₂*F*₂ obtained is contacted with a mixture of hydrogen gas and steam in a first zone of the second region of the vessel, in which an oxide having an intermediate composition between *U*₃*O*₈ and *UO*₂ is contacted with the hydrogen gas and steam within a second zone of the second region of said vessel. The problem with these processes is the low feed rate due to the need to produce acceptable ceramic grade *UO*₂ powder that can be made into dense *UO*₂ pellets.

Additional single-step dry processes for obtaining uranium dioxide powder (*i.e*., by direct reduction of *UF*₆ into *UO*₂) which include the IDR (Intermediate Dry Route - another trade name, not very descriptive) process have been widely used and are described in, for example, U.S. Patent No. 4,889,663; U.S. Pat. No. 4,397,824 and French No. 2,060,242. The powders obtained by the dry conversion process, including water vapor hydrolysis followed by pyrohydrolysis of the uranyl fluoride *UO*₂*F*₂ obtained, have the advantage of being readily sinterable. The powder produced is very active but hard to handle and produces very weak green pellets. Handling therefore is delicate and rejects are numerous if special care is not exercised. The IDR process converts *UF*₆ to *UO*₂ in a one-step, vapor/solid phase reaction that is hard to control and tends to produce a product with a *UO*₂*F*₂ contaminant. Part of the problem with this process is that two very exothermic processes occur in the same location at the tip of the mixing nozzle: (1) formation of *UO*₂*F*₂; and (2) some *UO*₃/*U*₃*O*₈ from the reaction of steam and entrained hydrogen from the surrounding atmosphere. As the process flow rate is increased, the amount of hydrogen that is intermixed with the steam hydrolysis step becomes variable which produces large variations in the flame temperature and results in large variations in the powder properties.

There are several so-called double step processes, to produce *UO*₂ from *UF*₆, utilizing flame reactors and rotary kilns, connected by scroll/screw type rotatable moving means for the first reaction generated *UO*₂*F*₂ powder. The general problem with these processes is that step 1 production of *UO*₂*F*₂ is not, in fact, protected from *H*₂ gas intrusion from step 2 formation of *UO*₂ in a rotary kiln; and *H*₂ intrusion into step 1 produces the variations in the powder properties described above. These seem not to be true commercial realizations, as *H*₂ seepage through unfilled screw or scroll feeders leads to the reaction:

*UO*₂*F*₂ + *N*₂ + *H*₂*O* + *H*₂ → *UO*₂ + 2*HF* + *H*₂*O* + *N*₂,

with uncontrolled temperature which produces either unreactive or too reactive powder.

Carter et al., U.S. Patent No. 5,757,087, utilizes at least two obliquely positioned flame reactor plumes, to produce circulating product *UO*₂*F*₂ product powder, which is "scrolled" to a horizontal kiln for reaction with countercurrent flow of steam and/or *H*₂, to provide *UO*₂ through an outlet chamber. No example is given. *Feugier*, in U.S. Patent No. 6,136,285, also utilizes a screw feeder between steps 1 and 2, and teaches concentric introduction of *UF*₆ internally, and *N*₂ in an annular space between *UF*₆ and steam; to provide a reaction at a central nozzle tip injector in a flame reactor to provide *UO*₂*F*₂ and *HF* gas. The *N*₂ is injected between the *UF*₆ and the steam to keep crystalline *UO*₂*F*₂ from forming on the nozzle tip. All *HF,* excess steam and *N₂* gas must be exhausted through filters in the top of the flame rector, as they are the only *HF* off gas filters shown in the patent. While this patent concentrates on the concentric nozzle in the flame reactor, there seems little realization as to what happens to *HF* formed, and unreacted *H*₂ and steam, in the second stage rotary pyrohydrolysis furnace which injects countercurrent steam and *H*₂. This rotary furnace requires 5 zones, with its FIG 8 showing kiln temperatures of over 680°C in zones 1-4, with maximum temperatures of the interior gas of *H*₂, *HF* and *H*₂*O* of 730°C-800°C, which temperatures should easily translate in a steady state process to the kiln shell. The only *HF* filters must also exit excess *H*₂ and steam, passing through/bubbling through, under pressure, the screw progressing *UO*₂*F*₂ and exiting through the same set of filters as the off-gas from the flame reactor exits through. Only one set of filters is contemplated in the patent.

Moreover, document EP 1 985 587 A1 discloses a two-step process for producing nuclear grade, active uranium dioxide (UO₂) powder in which the first step comprises reacting uranium hexafluoride (UF₆) with steam in, for example, an integrated dry rode (I DR)-type kiln or a flame reactor to yield uranyl fluoride (UO₂ F₂); and the second step comprises removing fluoride and reducing UO₂ F₂ to uranium dioxide (UO₂) in a second kiln under a steam/hydrogen atmosphere. The two-step process tightly controls the exothermicity of the reaction, which allows for a very tight temperature control which controls the growth of the particles and results in UO₂ powder that is active.

US patent 3 298 452 discloses a mechanical powder dispenser for the controlled withdrawal of powder from the lower extremity of a tower reactor in the context of large-scale production of uranium tetraflouride (UF₄) by the hydrogen reduction of uranium hexafluoride gas in a tower reactor. During the reaction of the uranium tetraflouride powder falls to the bottom of the tower reactor.

US 2003/0 064 519 A1 discloses a method for determining the progress of a chemical reaction in a furnace and for controlling the reaction in the context of conversion of gaseous uranium hexafluoride UF₆ into uranium oxide by oxidation using steam with controlling the conversion reaction in the furnace.

All of these processes provide substantial amounts of *HF* gas and micro entrained particles of *UO*₂, *UO*₂*F*₂, and *U*₃*O*₈, which must be removed in order to make a by-product of HF, uncontaminated with any uranium compounds. One patent in particular, Feugier, U.S. Patent No. 7,422,626, provides substantial detail in this area. There, again, filters are shown only in the stage 1 flame reactor, which seems to imply that *HF* and unreacted *H*₂ and steam from the stage 2 rotary kiln pass through the screw transport to exit in the stage 1 flame reactor. Therefore, the flame reactor is not truly hydrogen free and as the flame transitions between laminar and turbulent flow and randomly entrains gases in the flame from the surrounding gas, random fluctuations in temperature occur leading to highly variable *UO*₂*F*₂ powder properties which leads to highly variable *UO*₂ powder properties.

Here, as in all filter systems, filtering radioactive materials formed as fluffy particles must be cleaned by gas, such as *N*₂ blowback. Feugier, U.S. Patent No. 7,422,626*,* requires extremely radical sonic ejection of powder, by *N*₂ blowback at speeds of over 300 m/s for less than 1 sec.; this is over about 700 mph (sonic speed = 343.14 m/s at 20°C which = 707.58 mph). This is essential to their process. Sintered metal filters are well know, and almost all such filters have gas blowback valve means, as described in Mott Corporation Brochure, "Fiber Metal Gas Filtration" Rev. 2 10/08, and Union Carbide article by T. Shapiro et al. "Porous Metal Filters, Application to Feed Materials Production", 6/15/1961 (copy supplied to the British Library) where application of sintered porous metal filters to solid gas systems was operated in fluid bed systems. There, metal filters that have been plugged with dust, were cleaned by gas blowback at about 115 cubic feet/min., at 15 psi which translates to a velocity of about 417 feet/sec or 127 meters/sec which is below sonic speed. The calculation is as follows:

Nozzle openings = 3/16inch

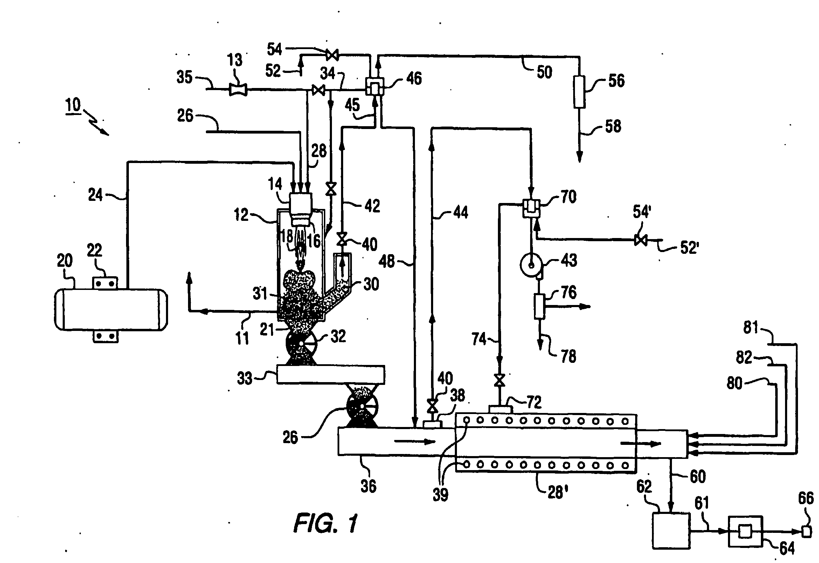

Number of nozzles = 24 (page 15, figure 1)

Flow per nozzle = 115/24 = 4.79 cubic feet/minute/nozzle

Velocity = 4.79 ft³/(3/16.3/16.3.14/4 in²)·(144 in²/ft²)/(60 sec/min) (where ·is equivalent to "times" or x = multiplied by)

Velocity = 417 ft/sec or 127 meters/sec.

Ejectors are also shown in FIG. 1, 4, 6, and 8 of *T. Shapiro et al.* (the small nubs over the opening of each filter in these figures) and described on page 12, 4^{th} paragraph.

Another process for producing *UO*₂ fuel pellets is disclosed in U.S. Patent No. 5,091,120, which describes a method for producing fritted *UO*₂ nuclear fuel pellets from metallic uranium. This method uses high value metal and therefore is not economically feasible.

U.S. Patent No. 6,656,391 discloses the use of a wet ammonium diuranate process (ADU) to produce both *UO*₃/*U*₃*O*₈ from both uranyl nitrate hexahydrate (UNH) and *UF₆.* In particular, the *UO*₃/*U*₃*O*₈ that is produced from this process then is processed in a calciner to produce *UO*₂. The ADU process produces a stable but only moderately active (*i.e*., only achieves a final pellet density of about 97.5% on a consistent basis) *UO*₂ powder. In addition, this process produces a large amount of liquid waste that must be treated to remove the fluoride. The common way of treatment is to add calcium hydroxide (*Ca*(*OH*)₂) slurry which then forms a large amount of solids from the final neutralization of the fluoride as *CaF₂.* Disposal of these solids is difficult due to their origin in a nuclear facility. The discharged liquid waste while having a very low residual fluoride, is still regulated and must be monitored for any discharge permits that are obtained.. Furthermore, the nitrate-based recycle (UNH) must be spiked with *HF* in order for it to have reasonable handling properties during the centrifugation and drying steps and produces a significant amount of nitrate that must be handled in the discharge as well as fluoride. The nitrate disrupts the ammonia recovery process due to the required addition of sodium hydroxide to free the ammonia from the nitrate. Another problem is the carryover of *NH₄F* in the dried *UO*₃/*U*₃*O*₈ product to the final calciner. This fluoride tends to agglomerate the *UO*₂ fines which reduces the overall powder activity and produces a semi-volatile *NH₄F* material that plates out and plugs the off-gas vents of the calciner.

A further extended type fluid bed process for producing nuclear reactor fuels is disclosed in U.S. Patent No. 4,053,559 (Hart et al.), which describes a three-step process using continuous, four stage fluidized beds interconnected in series to provide substantially complete conversion of *UF*₆ to *UO*₂. This process, however, is quite complicated, hard to operate and generates a *UO*₂ product with much residual fluoride.

Notwithstanding the extensive prior efforts referred to above, there remains a substantial need for improved procedures for converting *UF*₆ into solid *UO*₂ that produces a highly active, ceramic grade *UO*₂ powder at high production rates and which is easy to control, and which very importantly completely isolates steps where *H*₂ reactant is completely excluded from initial first stage reactions, where it poses serious *UO*₂ product variability problems. Use of fluid bed processes are not an answer due to the issues with forming un-reactive, large solids and residual fluoride removal.

It is, therefore, a major object of the invention to provide a block to *H*₂ backflow into the first reaction stage, a calcination process that can produce *UO*₂ with low residual fluoride levels and a product that has controlled particle sizes and a powder with good reactivity.

It is an object of the present invention to provide a two-step dry process for making nuclear grade, active *UO*₂ powder which tightly controls the exothermicity of the process steps and thus allows for very tight temperature control of each process step, and allows dual *HF* gas filtering, and particulate recirculation of entrained particles in the off-gases.

It is a further object of the present invention to provide a two-stage process wherein *UF*₆ first is converted to *UO*₂*F*₂ using steam and then converting the *UO*₂*F*₂ to *UO*₂ using a mixture of steam and hydrogen, which *UO*₂ contains only very small amounts of unconverted *UO*₂*F*₂ (less than about 50 ppm).

It is a further object of the present invention to provide a two-stage process for making nuclear grade, stable, active *UO*₂ powder, in which the two-stage process is carried out in two kilns, calciners or in flame reactors in which significant amounts of solids are retained in the kiln or calciner or are entrained in the flame reactor flame.

### SUMMARY OF THE INVENTION

The present invention meets this need and solves the above problems by providing a multi-step process for producing nuclear grade, active uranium dioxide (UO₂) powder:
(1) by reacting 1 mole of uranium hexafluoride gas (*UF*₆) steam with a steam to *UF*₆ mole ratio of 2 to 10 moles, plus *N*₂ of steam (*H*₂*O*), plus *N*₂ or other inert gas or gases, in a first stage flame reactor having at least one flame plume, to yield initial product uranyl fluoride particles (*UO*₂*F*₂) plus less than 0.1 mole of at least one of oxide particles *UO*₃ and *U*₃*O*₈, *HF* gas and unreacted steam and *N*₂ or other inert gas or gases, at a temperature in the flame plume of from 300°C to 800°C;
(2) passing the *HF* gas, unreacted steam and N₂ or other inert gas or gases, as well as fine, gas entrained initial product particles to a filter where all *HF*, unreacted steam and *N*₂ or other inert gas or gases pass through the filter and entrained particles do not;
(3) recycling filtered entrained solids by means of a steam or nitrogen powered gas ejector back into the steam or nitrogen flow of the flame reactor;
(4) passing the unentrained initial product, uranyl fluoride particles and any *UO*₃ and *U*₃*O*₈ particles through a positive, sealed valve means which passes powder, but prevents significant amounts of gaseous feedback from subsequent reactions in the second stage from entering into step (1);
(5) passing the initial product particles that pass through the positive sealed valve means into a second stage rotary kiln reactor, having a kiln shell and a temperature range ramp up and down at its kiln shell of from an initial 400°C to 700°C to a final temperature between 100°C to 300°C, where uranyl fluoride particles with any *UO*₃ and *U*₃*O*₈ particles, both from step (1), are passed along the rotary kiln countercurrent to 5 moles to 30 moles of steam (*H*₂*O*), 5 to 50 moles of *H*₂, and inert gas or gases, to reduce uranyl fluoride particles, and remove fluoride as *HF* gas and to reduce uranyl fluoride particles and any *UO*₃ and *U*₃*O*₈ particles, to form a sinterable outlet, *UO*₂ powder having a particle size from 0.1 micrometers to 100 micrometer, having a surface area from 2 meters²/gm to 8 meters²/gm (gram), preferably 4.5 meters²/gm to 6 meters²/gm;
(6) passing the *HF* gas, inert gas or gases, and unreacted *H*₂ or steam from the second stage reactor of step (5) through a filter to remove any entrained solids;
(7) passing the particles that do not pass through the filter of steps (2) and (6) back into the flame reactor of step (1) or the kiln of step (5);
(8) condensing *HF* and steam gas into liquid *HF* from the filtered off-gases;
(9) collection of *UO*₂ powder from an outlet of step (5); and
(10) pressing the collected *UO*₂ powder to a density greater than 98.5 wt. %.

A separate powder transport, such as an optional screw feeder or the like can be used between the positive sealed valve used in step (4) and the rotary kiln of step (5). These seals are not completely hermetic, however, they allow substantially less gas to flow back (about 94% to 95% less flowback) than a loose bed of particles, such as in a screw feeder. An optional, second, positive sealed valve can also be used between an optional screw feeder used to pass the initial product in step (5) and the actual rotary kiln of step (5). Residual fluoride as *UO*₂*F*₂ is less than 50 ppm and combined residual *UO*₃ and *U*₃*O*₈ is less than 100 ppm total in the final *UO*₂ of step (9). Blowback to clean the *HF* filters is standard practice and is constituted by short bursts of *N*₂ at below sonic speeds, that is at less than 250 meters/second (m/s). The "active" powder of step (9) is capable of pressing to a density greater than 98.5 wt%. The term "active" as used herein means a *UO*₂ powder that can be readily pressed into a pre-sintered ("green") pellet that can withstand normal handling without chipping and cracking or end-capping and that when sintered produces a high density (>98% theoretical density) pellet without excessive chips or cracks or other flaws.

In the first sep of the process, the steam to *UF*₆ mole ratio can range from between about 2 to 10 moles steam per mole *UF*₆, preferably from 4 to 8 moles steam per mole *UF*₆. Varying the steam/ *UF*₆ ratio controls the temperature of the reaction which varies the properties of the *UO*₂*F*₂ powder that is produced as well as the final *UO*₂ powder.

In the second step carried out in a separate kiln, the steam to hydrogen mole ratio can range from between about 1 to 10[?], that is 1 mole steam to 1 mole *H*₂; to 1 mole steam to 10 moles *H*₂. The residence time in the second kiln can range from between about 0.25 to 4.0 hours.

In both steps of the process, the preferred temperature can range from between about 400°C to 700°C.

### BRIEF DESCRIPTION OF THE DRAWINGS

In order to better understand the invention, embodiments of the present invention will now be described, by way of example only, with reference to the following accompanying drawings, in which:

FIG. 1 is a detailed schematic diagram of the method of this invention, showing hermetic gas blocking valve means between the flame reactor and rotary kiln, dual *HF* and steam gas filters and recirculation of entrained particulates back into the flame reactor;

FIG. 2 is a schematic, partially cross sectional view of the flame reactor nozzle and plume;

FIG. 3 is a schematic view of the hermetic gas blocking valve means in the form of a star valve, shown feeding to a screw feed transport means; and

FIG. 4 is a schematic, partly in section of one embodiment of a type of gas filter with particulate feedback and regular pulse valve inert gas blowback cleaning mechanism.

### DESCRIPTION OF THE PREFERRED EMBODIMENTS

The present invention provides a two-step process for producing nuclear grade, active uranium dioxide (*UO*₂) powder. The first step of the process comprises reacting uranium hexafluoride (*UF*₆) with steam in a flame reactor to yield uranyl fluoride (*UO*₂*F*₂) and small amounts of uranium trioxide/uranium octaoxide (*UO*₃/*U*₃*O*₈). The second step of the process comprises removing fluoride and reducing *UO*₃/*U*₃*O*₈ and/or *UO*₂*F*₂ to uranium dioxide (*UO*₂) in a rotary kiln, such as, for example, a calciner, under a steam/hydrogen atmosphere.

The term "flame reactor" means a reaction vessel operated to form a flame plume by reacting gas, such as uranium hexafluoride in an hydrolysis reaction with an oxidant such as steam, gaseous *H*₂*O* at over about 300°C to form a powder product and off gas, such as *HF* and excess steam. Nitrogen gas can be used as a buffer in a co-axial tubular jet or nozzle where usually steam is the outer reactant and uranium hexafluoride is the central reactant, the *N*₂ being used as a buffer gas so that the reaction occurs and solid particles are formed some distance from the jet or nozzle tip, as also described in U.S. Patent No. 5,757,087 (Carter et al.) and U.S. Patent No. 6,136, 285 (Feugier). The term "rotary kiln" means a rotating tubular pyrohydrolysis oven provided with heater means, powder feed means at an entry end and injector means near the reaction product exit for injecting a countercurrent flow of at least steam, gaseous *H*₂*O* and *H*₂, as generally described in U.S. Patent No. 6,136,285 (Feugier).

Neither the "flame reactor" nor the "rotary kiln" are in any way related to or equivalent to "fluidized bed reactors", which are described, for example in U.S. Patent No. 4,053,559 (Hart et al.). The process of this invention is meant to specifically exclude fluidized beds, using instead a combination of flame reactor and rotary kiln. Fluidized beds are tanks that inject process gas at the bottom below the powders. At a high enough gas flow and with the proper gas distributor at the bottom, the powder then resembles a liquid in that it conforms to the vessel geometry and solid objects put on the top surface of the fluidized bed would sink if they were dense enough. The advantage of a fluidized bed is that heat transfer is very good throughout the bed and the bed is therefore essentially a single temperature. The disadvantage is that fluidization occurs over a very narrow particle size range for a given gas flow rate. If the particles are too small, they are blown out of the reactor with the off-gas (called elution). If they are too large, they sink to the bottom. In this reaction where particle sizes would range from very small (small amount of *UF*₆ reacts with steam to form a small particle of *UO*₂*F*₂ to very large (*UF*₆ reacts with steam near an already formed particle of *UO*₂*F*₂ to make that particle bigger) a fluidized bed would be very difficult to control. Large particles must be milled down to produce a sinterable powder.

The flame reactor concept makes and grows particles while they are entrained in a jet. By controlling the residence time in the jet, one can set the maximum sized particle that is produced. Particles that are finer stay entrained in the gas and are reintroduced to the flame reactor to grow to a larger size.

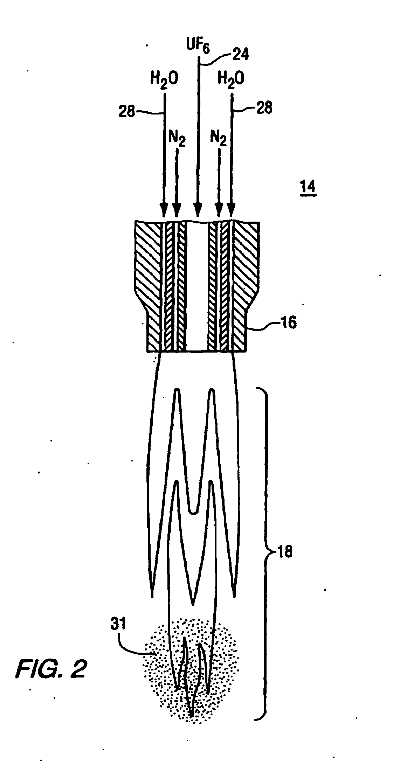

Referring now to FIG. 1 of the drawings, a multi-step process 10 is provided, where 1 mole of uranium hexafluoride gas *(UF₆)* from a storage cylinder or the like 20 heated to between 65°C and 175°C by heater 22, and passed through line 24 to a flame reactor 12, through "flame reactor ejector" 14 having at least one nozzle 16, to react with 2 to 10 moles of steam 28 at a temperature of from 300°C to 800°C within at least one flame plume 18 to provide initial product uranyl fluoride (*UO*₂*F*₂) that do not agglomerate greater than about 0.01 to 40 micrometers, so there is little trapped fluoride which passes as powder particles 31 into hopper 21. The entrained fines will generally have a particle size of from 0.01 micrometer to 20 micrometers. Off gases *HF*, *N₂* and *H*₂*O* are passed with entrained particles into first gas exit 30 and then as stream 42 to a fines filter 46. Additionally, *HF, N₂* and *H*₂*O* with entrained particles are also withdrawn from the bottom of flame reactor 12 as recycle stream 11 by, for example, the passing recycle stream 11 to dry steam 35 through ejector 13 to pull a vacuum. This stream is then recycled with the dry steam back to the flame ejector reactor nozzle 14. The purpose of this recycle is to grow the very fine particles that are entrained into larger particles that will settle out in the hopper 21 by putting them back into the flame reactor. Inert *N*₂ gas 26 can also be passed into nozzle 16, which nozzle preferably passes parallel gas streams in a concentric gas entry configuration, with a central *UF*₆ stream and outer steam streams with a *N*₂ stream therebetween separating the *UF*₆ and steam at the nozzle so particles are not formed directly at the nozzle entry into the flame reactor 12. This is better shown in FIG. 2 of the drawings, where a flame plume 18 is shown. Preferably, in the first step of the process, the steam: *UF*₆ mole ratio can range from between about 4 to 8 mole steam: 1 mole *UF*₆.

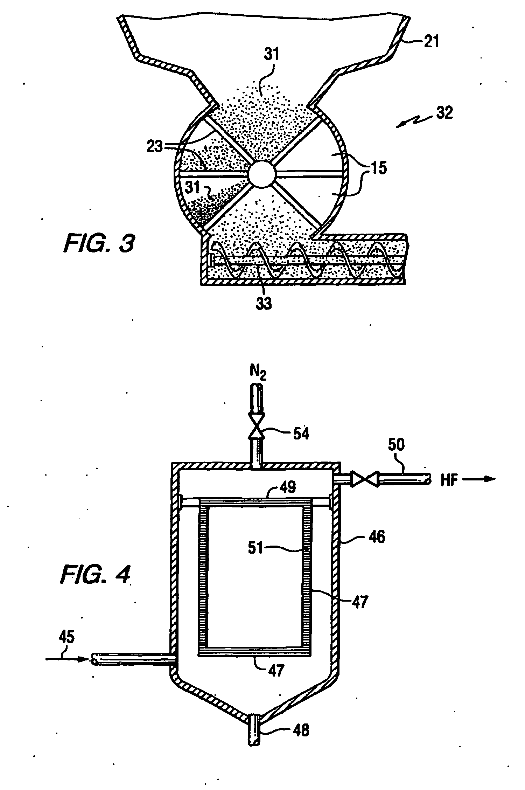

Very importantly, to provide truly multi-step process, with no flow-back of gas that could contain hydrogen from subsequent steps, a positive sealed valve means" 32 is required between the hopper 21 and any further steps, such as optional screw feeder 33. This is preferably in the form of a rotary vane star airlock valve, shown in FIGS. 1 and 3. The star valve rotates, which controls the flow of powder through the valve and prevents any significant amount of the gases from moving from the lower area to the upper area (or visa versa). By "significant amount" is meant less than 0.1 vol. % of gases used in the rotary kiln. The advantage of this type of valve over a screw feeder is that a positive seal is always provided whereas in a screw feeder, if the powder level gets too low, there is a direct path for gases to flow from the high to low pressure area or if the gas pressure in the second reactor is too high, the gas can blow through the powder back into the low pressure area. As shown in FIG. 3, powder particles 31 from the hopper 21 initially fill spaces between the vanes 23, which vanes turn to empty the particles into a subsequent apparatus, such as optional screw feeder 33. The vanes minimize potential backflow of gases harmful to step 1, such as *H*₂ utilizing tight vane contact with the walls of the valve and gas lock spaces 15 references. Both
http://www.bushandwilton.com/usa/index.htm, and
http://www.bushandwilton.com/usaBW RotaryAirlocks USA.pdf provide further information on this type preferred positive seal star valve. Some gas can get into the volume between the vanes of the star valve, but this is minor. Another positive sealed approach would be the use of lock hoppers. The term "positive sealed valve means" means any device which minimizes gas backflow into the flame reactor.

Recycle line 34 takes particles from the fines filter 46 back to the flame reactor. The initial process *UO*₂*F*₂ powder as well as the minor amount of *UO*₃ and *U*₃*O*₈ powder are transported by gravity, fall, or as shown in FIGS. 1 and 3 optional screw feeder 33, scroll member or sealed conveyor belt, or the like to a rotary kiln/calciner 36 having a containing kiln shell 28' with heaters 39 surrounding the kiln. The kiln operates at a shell temperature of 400°C at the *UO*₂*F* feed end, to a maximum middle temperature of 700°C and at a temperature of 100°C to 300°C at the *UO*₂ product discharge end. The bed temperature is likely to be higher than the shell temperature due to the exothermic nature of the *UO*₂*F*₂ + *H*₂ => *UO*₂ + 2*HF* reaction. However, at steady state, the bed temperature will be in equilibrium with the wall temperature wall temperatures. Use of temperatures over 700°C will pre-sinter the powder and reduce the activity of the final product unless extreme particle size reduction is enforced upon the particles. A second optional positive seal valve 26 can be used at the exit of the screw feeder if desired, before entry into the rotary kiln.

At the *UO*₂ solid exit end of the rotary kiln a parallel countercurrent flow of 5 moles to 30 moles of dry steam 80 and 5 moles to 50 moles *H*₂, 81 plus inert *N*₂, 82 carrier gas, per 1 mole *UO*₂*F*₂ powder is injected to remove fluoride as *HF* gas to reduce *UO*₂*F*₂ and *UO*₃ and *U*₃*O*₈ to compressible *UO*₂ powder having a particle size from 0.1 micrometers to 100 micrometers having a surface area from 2 meters²/gm to 7 meters²/gm, containing less than about 50 ppm *UO*₂*F*₂ residue and that can be pressed to a final sintered density greater than 98.5 wt. % of theoretical density.

The generated *HF* and unreacted *H*₂ and steam plus *N*₂ gases are exited preferably at the initial front end through second off-gas exit 38, feeding into second off-gas stream 44, and passing to separate fines filter 70. This second *HF*, steam, nitrogen and *H*₂ off-gas exit 38 within the calciner is essential to the process as a means of maintaining a steady state pressure in the calciner. Also shown is a fines recirculation line 74 into fines kiln entry 72 back into the rotary kiln/calciner. A condenser 76 is also shown with a line pump 43 to remove *HF* as a liquid 78 and produce a fluoride free *H*₂ which can then be burned or recycled.

As shown in FIG. 1, as the off gases and entrained particles from stream 42 and 45 pass into fines filter 46, *HF* and steam and nitrogen passes to stream 50 and into condenser 56 to provide clean *HF* liquid 58 for storage or sale. The nitrogen is discharged to the atmosphere. Additionally, trapped particulates are recirculated via recycle line 48 to the rotary kiln as the filter is cleaned via standard subsonic pulse valve 54 admitting *N*₂ gas from pulse line 52 in a standard fashion well known in the art.

FIG. 4 shows a standard type fines filter shown as 46 or 70 in FIG. 1, with off-gas inlet stream 45, *HF*, steam and *N*₂ and other off gas outlet stream 50, fines return recycle line 48 and pores 51 in the filter body 47. The gas passes through top filter portion 49 while particles collect generally on the filter body which utilizes a *N*₂ subsonic blow-back valve 54 for cleaning the filter. Fines filter 70 shows *N*₂ feed pulse gas line 52' and pulse valve 54'.

Referring back to FIG. 1, a plurality of valves 40 are also shown as well as *UO*₂ stream exit 60 into powder container 62 which can pass to pellet press 64 through line 61 to provide *UO*₂ pellets 66.

### EXAMPLE

The following example is intended to illustrate the invention and should not be construed as limiting the invention in any way.

### Example

In the first reaction, the steam/ *UF*₆ ratio of 0.2 by weight with the temperature in the flame reactor of 400° C.

In the rotary kiln reaction, the steam/ *H*₂ ration = 20 by weight, with the temperature held at a maximum 600°C. The steam/ *UO*₂ ratio is about 0.8 by weight

The *UO*₂ powder surface area is equal to approximately 4 meters²/gm. The final density of pressed and sintered pellets was approximately 98.5%.

A positive valve seal - star valve is used between the first reaction and the rotary kiln.

## Claims

1. A multi-step process for producing nuclear grade, active uranium dioxide (UO₂) powder by:
(1) reacting 1 mole of uranium hexafluoride gas (*UF*₆) with 2 to 10 moles of steam, plus inert gas, in a first stage flame reactor having at least one flame, to yield initial product uranyl fluoride particles (*UO*₂*F*₂), *HF gas* and unreacted steam and inert gas, at a temperature of from 300°C to 800°C;
(2) passing *HF* gas, unreacted steam and inert gas, as well as gas entrained initial product particles to a filter, where all *HF*, unreacted steam and inert gas pass through the filter and entrained particles do not;
(3) passing the unentrained initial product uranyl fluoride particles through a positive, valve means which passes powder, but prevents significant amounts of less than 0,1 vol% of gases used in the rotary kiln of gaseous feedback from subsequent reactions into step (1);
(4) passing the initial product particles that pass through the positive sealed valve means into a second stage rotary kiln reactor, having a kiln shell and a temperature range at its kiln shell of from an initial 400°C to 700°C to a final temperature between 100°C to 300°C, where uranyl fluoride particles are passed along the rotary kiln countercurrent to steam, hydrogen, and inert gas, to react and remove fluoride as *HF* gas and to reduce uranyl fluoride particles, to form a sinterable, outlet, *UO*₂ powder;
(5) passing the *HF* gas, steam, inert gas, and unreacted *H*₂, or steam and any entrained particles to a filter where all *HF*, steam, inert gas, and *H*₂ gases pass through the filter and entrained particles do not;
(6) passing the particles that do not pass through the filters of steps (2) and (5) back into the flame reactor of step (1) or the kiln of step (4);
(7) condensing *HF* and steam gas into liquid *HF* from the filtered off-gases; and
(8) collecting *UO*₂ powder from an outlet of step (4).

2. The method of claim 1, wherein step (1), generates less than 0.1 mole of at least one of oxide particles *UO*₃ and *U*₃*O*₈ which are also formed and pass through the method.

3. The method of claim 1, wherein the inert gas is *N*₂.

4. The method of claim 1, wherein the filtered entrained particles filtered in step (2) are recycled by means of a gas selected from the group consisting of inert gas or gases and steam and mixtures thereof back into the flame reactor of step (1).

5. The method of claim 4, wherein the gas is selected from the group consisting of N₂ and steam and mixtures thereof and an ejector is used in the recycle stream.

6. The method of claim 1, wherein, in step 4, the inert gas is *N*₂ and the sinterable *UO*₂ powder formed has a particle size of from 0.1 micrometer to 100 micrometers.

7. The method of claim 1, wherein entrained particles in steps (2) and (5) have particle sizes from 0.001 micrometer to 0.1 micrometer and the inert gas used in step (5) is *N*₂.

8. The method of claim 1, wherein the initial product that passes through the positive sealed valve means of step (3) is passed into the rotary kiln of step (5) by use of a screw feeder.

9. The method of claim 8, wherein a positive valve means is used between the screw feeder and the rotary kiln.

10. The method of claim 1, wherein the positive valve means is a rotary vane airlock valve.

11. The method of claim 9, wherein the positive valve means is a rotary vane airlock valve.

12. The method of claim 1, wherein the *UO*₂ powder of step (8) has residual *UO*₂*F*₂ of less than 50 ppm and has a combined residual *UO*₃ and *U*₃*O*₈ of less than 100 ppm.

13. The method of claim 1, wherein the filters are cleaned by inert gas blowback bursts with a through the nozzle velocity of less than 250 m/s.

14. The method of claim 1, wherein the collected *UO*₂ powder of step (8) is pressed to a density greater than 98.5 wt. %.

15. The method of claim 1, wherein the outlet *UO*₂ powder has a surface area from 2 meters²/gm to 8 meters²/gm.

## Patentansprüche

1. Mehrstufiger Prozess zum Erzeugen von aktivem Urandioxidpulver (UO₂-Pulver) von nuklearer Qualität durch:
(1) Reagieren von 1 Mol Uranhexafluoridgas (UF₆) mit zwei bis zehn Mol Dampf plus Inertgas in einem Erststufen-Flammenreaktor mit mindestens einer Flamme, um Anfangsprodukt-Uranylfluoridpartikel (UO₂F₂), HF-Gas und unreagiertem Dampf und Inertgas zu ergeben, bei einer Temperatur von 300°C bis 800°C,
(2) Leiten von HF-Gas, unreagiertem Dampf und Inertgas sowie im Gas mitgeführten Anfangsprodukt-Partikeln zu einem Filter, wo HF, unreagierter Dampf und Inertgas sämtlich durch das Filter hindurchpassieren und mitgeführte Teilchen dies nicht tun,
(3) Leiten der nichtmitgeführten Anfangsprodukt-Uranylfluoridpartikel durch ein positives Ventilmittel, das Pulver durchlässt, aber signifikante Mengen von weniger als 0,1 Volumenprozent von im Drehofen verwendeten Gasen aus gasförmiger Rückführung aus nachfolgenden Reaktionen in Schritt (1) hindert,
(4) Leiten der Anfangsprodukt-Partikel, die durch das positive abgedichtete Filtermittel gelangen, in einen Zweitstufen-Drehofenreaktor mit einem Ofenmantel und einem Temperaturbereich an seinem Ofenmantel von anfänglich 400°C bis 700°C zu einer Endtemperatur zwischen 100°C bis 300°C, wobei Uranyfluoridpartikel entlang des Drehofens im Gegenstrom zu Dampf, Wasserstoff und Inertgas geleitet werden, um Fluorid als HF-Gas zu reagieren und abzuscheiden und Uranylfluoridpartikel zu reduzieren, um ein sinterbares Auslaß-UO₂-Pulver zu bilden,
(5) Leiten des HF-Gases, Dampfes, Inertgases und unreagiertes H₂ oder von Dampf und irgendwelchen mitgeführten Teilchen zu einem Filter, wo HF, Dampf, Inertgas und H₂-Gase durch das Filter passieren und mitgeführte Teilchen dies nicht tun,
(6) Leiten der Teilchen, die nicht durch die Filter der Schritte (2) und (5) gelangen, zurück in den Flammenreaktor nach Schritt (1) bzw. den Ofen nach Schritt (4),
(7) Kondensieren von HF- und Dampf-Gas in flüssiges HF aus den ausgefilterten Gasen, und
(8) Sammeln von UO₂-Pulver aus einem Auslaß von Schritt (4).

2. Verfahren nach Anspruch 1, wobei Schritt (1) weniger als 0,1 Mol von mindestens einem der Oxidteilchen UO₃ und U₃O₈ erzeugt, die ebenfalls gebildet werden und durch das Verfahren gelangen.

3. Verfahren nach Anspruch 1, wobei das Inertgas N₂ ist.

4. Verfahren nach Anspruch 1, wobei die im Schritt (2) ausgefilterten mitgeführten Teilchen mittels eines Gases, das aus der Gruppe, bestehend aus Inertgas oder Inertgasen und Dampf und Gemischen hiervon besteht, zurück in den Flammenreaktor nach Schritt (1) rezirkuliert werden.

5. Verfahren nach Anspruch 4, wobei das Gas aus der Gruppe, bestehend aus N₂ und Dampf und Gemischen hiervon besteht, ausgewählt ist und ein Ejektor in dem Rezirkulationsstrom benutzt wird.

6. Verfahren nach Anspruch 1, wobei im Schritt 4 das Inertgas N₂ ist und das gebildete sinterbare UO₂-Pulver eine Teilchengröße von 0,1 Mikrometer bis 100 Mikrometer hat.

7. Verfahren nach Anspruch 1, wobei mitgeführte Teilchen in den Schritten (2) und (5) Teilchengrößen von 0,001 Mikrometer bis 0,1 Mikrometer haben und das im Schritt (5) verwendete Inertgas N₂ ist.

8. Verfahren nach Anspruch 1, wobei das Anfangsprodukt, das durch das positive abgedichtete Ventilmittel nach Schritt (3) passiert, in den Drehofen nach Schritt (5) unter Verwendung eines Schneckenförderers geleitet wird.

9. Verfahren nach Anspruch 8, wobei ein positives Ventilmittel zwischen dem Schneckenförderer und dem Drehofen benutzt wird.

10. Verfahren nach Anspruch 1, wobei das positive Ventilmittel eine Drehflügel-Luftschleuse ist.

11. Verfahren nach Anspruch 9, wobei das positive Ventilmittel eine Drehflügel-Luftschleuse ist.

12. Verfahren nach Anspruch 1, wobei das UO₂-Pulver nach Schritt (8) restliches UO₂F₂ von weniger als 50 ppm enthält und kombiniertes restliches UO₃ und U₃O₈ von weniger als 100 ppm enthält.

13. Verfahren nach Anspruch 1, wobei die Filter durch Inertgas-Rückblasstöße mit einer Düsendurchtrittsgeschwindigkeit von weniger als 250 m/s gereinigt werden.

14. Verfahren nach Anspruch 1, wobei das gesammelte UO₂-Pulver aus Schritt (8) auf eine Dichte von größer als 98,5 Gewichtsprozent gepresst wird.

15. Verfahren nach Anspruch 1, wobei das Auslaß-UO₂-Pulver eine Oberfläche von zwei Meter²/g bis 8 Meter²/g hat.

## Revendications

1. Procédé de production en plusieurs étapes d'une poudre de dioxyde d'uranium (*UO₂*) active de qualité nucléaire, consistant à :
(1) faire réagir 1 mole de gaz d'hexafluorure d'uranium *(UF₆)* avec 2 à 10 moles de vapeur d'eau, ainsi que du gaz inerte, dans un réacteur à flamme de premier étage ayant au moins une flamme, pour obtenir des particules de fluorure d'uranyle de produit initial (*UO₂F₂*), du gaz *HF* et de la vapeur d'eau n'ayant pas réagi et du gaz inerte, à une température comprise entre 300 °C et 800 °C ;
(2) faire passer le gaz *HF,* la vapeur d'eau n'ayant pas réagi et le gaz inerte, ainsi que les particules de produit initial entraînées par le gaz dans un filtre, où la totalité du *HF,* de la vapeur d'eau n'ayant pas réagi et du gaz inerte passe à travers le filtre et les particules entraînées ne passent pas ;
(3) faire passer les particules de fluorure d'uranyle du produit initial non entraînées à travers un moyen de vanne à étanchéité parfaite qui laisse passer la poudre, mais empêche des quantités significatives, inférieures à 0,1 % en volume des gaz utilisés dans le four rotatif, de rétroaction gazeuse de réagir ultérieurement dans l'étape (1) ;
(4) faire passer les particules de produit initial qui passent à travers le moyen de vanne à étanchéité parfaite dans un réacteur à four rotatif de deuxième étage, ayant une virole de four et une plage de température au niveau de sa virole de four comprise entre une température initiale comprise entre 400 °C et 700 °C et une température finale comprise entre 100 °C et 300 °C, où les particules de fluorure d'uranyle passent le long du four rotatif à contre-courant de la vapeur d'eau, de l'hydrogène et du gaz inerte, pour réagir et éliminer le fluorure en tant que gaz *HF* et pour réduire les particules de fluorure d'uranyle, afin de former une poudre d'*UO₂* de sortie frittable ;
(5) faire passer le gaz *HF,* la vapeur d'eau, le gaz inerte, et le *H₂* n'ayant pas réagi, ou la vapeur d'eau et toutes les particules entraînées dans un filtre, où la totalité du *HF,* de la vapeur d'eau, du gaz inerte et des gaz *H₂* passe à travers le filtre et les particules entraînées ne passent pas ;
(6) faire passer les particules qui ne passent pas à travers les filtres des étapes (2) et (5) à nouveau dans le réacteur à flamme de l'étape (1) ou dans le four de l'étape (4) ;
(7) condenser le *HF* et la vapeur gazeuse en *HF* liquide à partir des effluents gazeux filtrés ; et
(8) collecter la poudre d'*UO*₂ à partir d'une sortie de l'étape (4).

2. Procédé selon la revendication 1, dans lequel l'étape (1) génère moins de 0,1 mole d'au moins des particules d'oxyde *UO₃* et/ou *U₃O₈* qui sont également formées et passent à travers le procédé.

3. Procédé selon la revendication 1, dans lequel le gaz inerte est du *N₂.*

4. Procédé selon la revendication 1, dans lequel les particules filtrées entraînées, filtrées dans l'étape (2) sont recyclées de nouveau dans le réacteur à flamme de l'étape (1) à l'aide d'un gaz sélectionné dans le groupe consistant en un ou plusieurs gaz inertes et la vapeur d'eau et leurs mélanges.

5. Procédé selon la revendication 4, dans lequel le gaz est sélectionné dans le groupe consistant en le *N₂* et la vapeur d'eau et leurs mélanges, et un éjecteur est utilisé dans le flux de recyclage.

6. Procédé selon la revendication 1, dans lequel, dans l'étape (4), le gaz inerte est du N₂ et la poudre d'*UO₂* frittable formée présente une taille de particules comprise entre 0,1 micromètre et 100 micromètres.

7. Procédé selon la revendication 1, dans lequel les particules entraînées dans les étapes (2) et (5) ont des tailles de particules comprises entre 0,001 micromètre et 0,1 micromètre et le gaz inerte utilisé dans l'étape (5) est du *N₂.*

8. Procédé selon la revendication 1, dans lequel le produit initial qui passe à travers le moyen de vanne à étanchéité parfaite de l'étape (3) est amené à passer dans le four rotatif de l'étape (5) en utilisant un alimentateur à vis.

9. Procédé selon la revendication 8, dans lequel un moyen de vanne à étanchéité parfaite est utilisé entre l'alimentateur à vis et le four rotatif.

10. Procédé selon la revendication 1, dans lequel le moyen de vanne à étanchéité parfaite est une vanne-écluse rotative à palettes.

11. Procédé selon la revendication 9, dans lequel le moyen de vanne à étanchéité parfaite est une vanne-écluse rotative à palettes.

12. Procédé selon la revendication 1, dans lequel la poudre d'*UO₂* de l'étape (8) présente un *UO₂F₂* résiduel inférieur à 50 ppm et présente un *UO₃* et un *U₃O₈* résiduels combinés inférieurs à 100 ppm.

13. Procédé selon la revendication 1, dans lequel les filtres sont nettoyés par des salves de retour de gaz inerte avec une vitesse à travers la buse inférieure à 250 m/s.

14. Procédé selon la revendication 1, dans lequel la poudre d'*UO₂* collectée de l'étape (8) est pressée à une densité supérieure à 98,5 % en poids.

15. Procédé selon la revendication 1, dans lequel la poudre d'*UO₂* de sortie présente une surface spécifique comprise entre 2 mètres²/gm et 8 mètres²/gm.
